Europäisches Patentamt
European Patent Office
Office européen des brevets

(11) Veröffentlichungsnummer: **0 286 963**
**A1**

# EUROPÄISCHE PATENTANMELDUNG

(21) Anmeldenummer: 88105493.6

(22) Anmeldetag: 07.04.88

(51) Int. Cl.⁴: C07F 9/24 , C07F 9/26 , A01N 57/30

(30) Priorität: 16.04.87 DE 3712937

(43) Veröffentlichungstag der Anmeldung: 19.10.88 Patentblatt 88/42

(84) Benannte Vertragsstaaten: AT BE CH DE ES FR GB GR IT LI NL

(71) Anmelder: BAYER AG
Konzernverwaltung RP Patentabteilung
D-5090 Leverkusen 1 Bayerwerk(DE)

(72) Erfinder: Mauer, Fritz, Dr.
Roeberstrasse 8
D-5600 Wuppertal 1(DE)
Erfinder: Homeyer, Bernhard, Dr.
Obere Strasse 28
D-5090 Leverkusen 3(DE)
Erfinder: Becker, Benedikt, Dr.
Metzkausener Strasse 14
D-4020 Mettmann(DE)
Erfinder: Stendel, Wilhelm, Dr.
In den Birken 55
D-5600 Wuppertal 1(DE)

(54) **Phosphorsäureesteramide.**

(57) Die Erfindung betrifft neue Phosphorsäureesteramide der allgemeinen Formel (I)

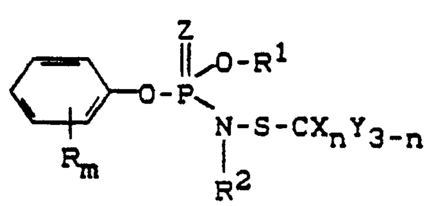

(I)

in welcher
R gleich oder verschieden ist und für Alkyl, Alkoxy, Alkylthio, Alkylsulfinyl, Alkylsulfonyl, Alkoxycarbonyl, Halogen, Nitro, Halogenalkyl und Cyano steht,
m für eine Zahl 1, 2 oder 3 steht,
$R^1$ und $R^2$ gleich oder verschieden sind und für Alkyl stehen,
Z für Sauerstoff oder Schwefel steht,
X und Y gleich oder verschieden sind und für Halogen stehen und
n für die Zahl 0, 1, 2 oder 3 steht,
welche als Schädlingsbekämpfungsmittel verwendet werden können.

EP 0 286 963 A1

Xerox Copy Centre

## Phosphorsäureesteramide

Die Erfindung betrifft neue Phosphorsäureesteramide, Verfahren und neue Zwischenprodukte zu ihrer Herstellung sowie ihre Verwendung als Schädlingsbekämpfungsmittel, insbesondere als Insektizide.

Es ist bereits bekannt, daß bestimmte N-Alkyl-substituierte Phosphorsäureesteramide und Thionophosphorsäureesteramide, wie z.B. O-Ethyl-O-(3-methyl-4-methylthiophenyl)-N-isopropyl-phosphorsäureesteramid und O-Ethyl-O-(2-isopropyloxycarbonyl-phenyl)-N-isopropyl-thionophosphorsäureesteramid, zur Bekämpfung von Insekten geeignet sind (vgl. US-PS 2 978 479, DE-OS 16 68 047). Die insektizide Wirkung dieser bekannten Verbindungen ist jedoch, insbesondere bei niedrigen Aufwandmengen bzw. Wirkstoffkonzentrationen und bezüglich der Wirkdauer, nicht immer voll zufriedenstellend.

Es wurden nun neue Phosphorsäureesteramide der allgemeinen Formel (I)

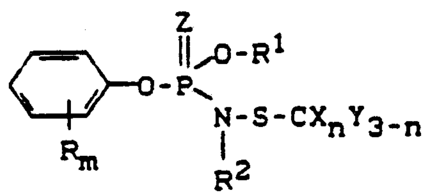

(I)

gefunden,
in welcher
R gleich oder verschieden ist und für Alkyl, Alkoxy, Alkylthio, Alkylsulfinyl, Alkylsulfonyl, Alkoxycarbonyl, Halogen, Nitro, Halogenalkyl und Cyano steht,
m für eine Zahl 1, 2 oder 3 steht,
$R^1$ und $R^2$ gleich oder verschieden sind und für Alkyl stehen,
Z für Sauerstoff oder Schwefel steht,
X und Y gleich oder verschieden sind und für Halogen stehen und
n für die Zahl 0, 1, 2 oder 3 steht.

Weiter wurde gefunden, daß man die neuen Phosphorsäureesteramide der Formel (I) erhält, wenn man

a) Phosphorsäureesteramid-chloride der allgemeinen Formel (II)

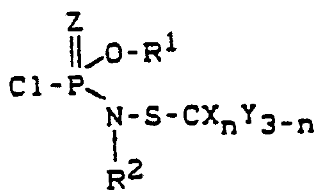

(II)

in welcher
$R^1$, $R^2$, Z, X, Y und n die oben angegebene Bedeutung haben,
mit Phenolen der allgemeinen Formel (III)

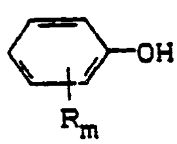

(III)

in welcher
R und m die oben angegebene Bedeutung haben,
gegebenenfalls in Form ihrer Salze, gegebenenfalls in Gegenwart eines Säureakzeptors und gegebenenfalls in Gegenwart eines Verdünnungsmittels umsetzt, oder

b) Phosphorsäureesteramide der allgemeinen Formel (IV)

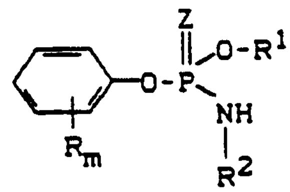

(IV)

in welcher
R, $R^1$, $R^2$, Z und m die oben angegebene Bedeutung haben
mit Sulfensäurehalogeniden der allgemeinen Formel (V)

$R^3$-S-$CX_nY_{3-n}$ (V)

in welcher
X, Y und n die oben angegebene Bedeutung haben und
$R^3$ für Halogen (insbesondere Fluor, Chlor oder Brom, vorzugsweise Chlor) steht,
gegebenenfalls in Gegenwart eines Säureakzeptors und gegebenenfalls in Gegenwart eines Verdünnungsmittels umsetzt.

Schließlich wurde gefunden, daß sich die neuen Phosphorsäureesteramide der Formel (I) durch sehr starke insektizide Wirksamkeit auszeichnen.

Die neuen Verbindungen der Formel (I) zeigen insbesondere eine überraschende, lang anhaltende Wirkung gegen Bodeninsekten, wie z.B. Phorbia antiqua und Diabrotica balteata sowie eine hervorragende Wirkung gegen pflanzenschädigende Insekten, wie z.B. Phaedon-Larven und Plutella-Raupen.

Überraschenderweise zeigen die erfindungsgemäßen Phosphorsäureesteramide der Formel (I) vor allem eine länger andauernde insektizide Wirkung als die oben erwähnten bekannten N-Alkyl-substituierten Phosphorsäureesteramide und Thionophosphorsäureesteramide. Die erfindungsgemäßen Stoffe stellen somit eine wertvolle Bereicherung der Technik dar.

In der Definition von R in den allgemeinen Formeln sind Alkyl, Alkoxy, Alkylthio, Alkylsulfinyl, Alkylsulfonyl und Halogenalkyl geradkettig oder verzweigt und enthalten vorzugsweise 1 bis 6, insbesondere 1 bis 4 und besonders bevorzugt 1 oder 2 Kohlenstoffatome. Halogenalkyl entspricht im Alkylteil der Definition der Alkylgruppe R und enthält vorzugsweise 1 bis 7, insbesondere 1 bis 5, und besonders bevorzugt 1 bis 3 gleiche oder verschiedene Halogenatome (Fluor, Chlor, Brom und/oder Iod, vorzugsweise Fluor und/oder Chlor). Beispielhaft seien die obigen Reste aufgeführt, welche folgende Alkylteile einthalten: Methyl, Ethyl, n-und i-Propyl und n-, i-, sec.-und t-Butyl. Als Halogenalkyl seien beispielsweise Trichlormethyl, Trifluormethyl und Pentafluorethyl genannt. Der Alkylteil von Alkoxycarbonyl ist geradkettig oder verzweigt und enthält vorzugsweise 1 bis 4, insbesondere 2 oder 3 Kohlenstoffatome in Alkylteil.

Halogen R bedeutet Fluor, Chlor, Brom und/oder Iod, vorzugsweise Fluor, Chlor und/oder Brom, insbesondere Fluor und/oder Chlor.

Vorzugsweise steht R für Methyl, Methylthio, Methylsulfonyl, Methylsulfinyl und/oder i-Propoxycarbonyl und beson ders bevorzugt für Methyl, Methylthio und/oder i-Propoxycarbonyl.

m steht in den allgemeinen Formeln vorzugsweise für die Zahlen 1 oder 2.

$R_m$ steht vorzugsweise für 2-i-Propoxycarbonyl oder für 3-Methyl, 4-Methylthio.

In den allgemeinen Formeln bedeuten Alkyl $R^1$ und $R^2$ gleiche oder verschiedene, geradkettige oder verzweigte Alkylreste mit vorzugsweise 1 bis 6, insbesondere 1 bis 4 Kohlenstoffatomen, wie Methyl, Ethyl, n-und i-Propyl und n-, i-, s-und t-Butyl. Als $R^1$ sind Methyl und Ethyl und als $R^2$ ist i-Propyl besonders bevorzugt.

In den allgemeinen Formeln stehen X und Y für gleiches oder verschiedenes Halogen, wie Fluor, Chlor, Brom und/oder Iod, vorzugsweise Fluor, Chlor und/oder Brom, insbesondere Fluor und/oder Chlor, wobei X vorzugsweise für Chlor und Y vorzugsweise für Fluor steht.

n bedeutet vorzugsweise die Zahlen 1 oder 2, insbesondere die Zahl 2.

Für die -$CX_nY_{3-n}$-Gruppe steht vorzugsweise die -$CCl_2F$-Gruppe.

Von den erfindungsgemäßen Phosphorsäureesteramiden der Formel (I) sind diejenigen bevorzugt, in welchen
R gleich oder verschieden ist und für $C_1$-$C_4$-Alkyl, $C_1$-$C_4$-Alkoxy, $C_1$-$C_4$-Alkylthio, $C_1$-$C_4$-Alkylsulfinyl, $C_1$-$C_4$-Alkylsulfonyl, $C_1$-$C_4$-Alkoxycarbonyl; Halogen; Nitro; Halogen-$C_1$-$C_4$-alkyl mit 1 bis 7 Halogenatomen oder Cyano steht,
m für eine Zahl 1, 2 oder 3 steht,
$R^1$ und $R^2$ gleich oder verschieden sind und für $C_1$-$C_4$-Alkyl stehen,
Z für Sauerstoff oder Schwefel steht,

X und Y gleich oder verschieden sind und für Chlor oder Fluor stehen und
n für die Zahl 0, 1, 2 oder 3 steht.

Besonders bevorzugt sind diejenigen Phosphorsäureesteramide der Formel (I), in welchen
R gleich oder verschieden ist und für Methyl, Ethyl, Methoxy, Methylthio, Methylsulfinyl, Methylsulfonyl, Methoxycarbonyl, Ethoxycarbonyl, Isopropoxycarbonyl, Fluor, Chlor, Brom, Nitro, Trifluormethyl oder Cyano steht,
m für eine Zahl 1, 2 oder 3 steht,
$R^1$ und $R^2$ gleich oder verschieden sind und für Methyl, Ethyl, n-oder i-Propyl, n-, i-, s-und t-Butyl stehen,
Z für Sauerstoff oder Schwefel steht,
X und Y gleich oder verschieden sind und für Fluor oder Chlor stehen und
n für die Zahl 0, 1, 2 oder 3 steht.

Ganz besonders bevorzugt sind die Phosphorsäureesteramide der Formel (I), in welchen
R für Methyl, Methylthio, Methylsulfinyl, Methylsulfonyl und/oder i-Propoxycarbonyl steht,
m für eine Zahl 1 oder 2 steht,
$R^1$ für Methyl oder Ethyl steht,
$R^2$ für i-Propyl steht,
X für Chlor steht,
Y für Fluor steht,
Z für Sauerstoff oder Schwefel steht und
n für die Zahl 2 steht.

Die für die Verbindungen der Formel (I) angegebenen bevorzugten Definitionen gelten auch für die Ausgangsverbindungen der Formeln (II) bis (VI).

Als besonders wichtige Verbindungen der Formel (I) seien genannt:
O-Ethyl-O-(3-methyl-4-methylthio-phenyl)-N-isopropyl-N-(fluordichlormethyl-mercapto)-phosphorsäureesteramid, O-Ethyl-O-(2-isopropyloxycarbonyl-phenyl)-N-isopropyl-N-(fluordichlormethyl-mercapto)-thionophosphorsäureesteramid, O-Methyl-O-(2-isopropyloxy-carbonyl-phenyl)-N-isopropyl-N-(fluordichlormethyl-mercapto)-thionophosphorsäureesteramid, O-Ethyl-O-(3-methyl-4-methylsulfinylphenyl)-N-isopropyl-N-(fluordichlormethyl-mercapto)-phosphorsäureesteramid und O-Ethyl-O-(3-methyl-4-methylsulfonyl-phenyl)-N-isopropyl-N-(fluordichlormethyl-mercapto)-phosphorsäureesteramid.

Verwendet man bei der Verfahrensvariante (a) beispielsweise 3-Methyl-4-methylthiophenol und Phosphorsäureethylester-N-isopropyl-N-(fluordichlormethylthio)-amid-chlorid als Ausgangsstoffe, so kann der Reaktionsablauf durch das folgende Formelschema wiedergegeben werden:

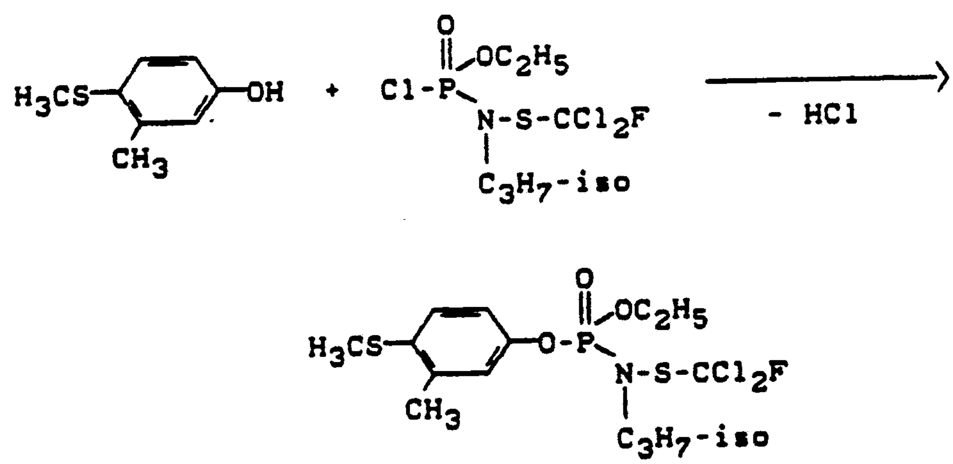


Verwendet man bei der Verfahrensvariante (b) beispielsweise O-Ethyl-O-(2-isopropyloxycarbonyl-phenyl)-N-isopro pyl-thionophosphorsäureesteramid und Fluordichlormethansulfenylchlorid als Ausgangsstoffe, so kann der Reaktionsablauf durch das folgende Formelschema wiedergegeben werden:

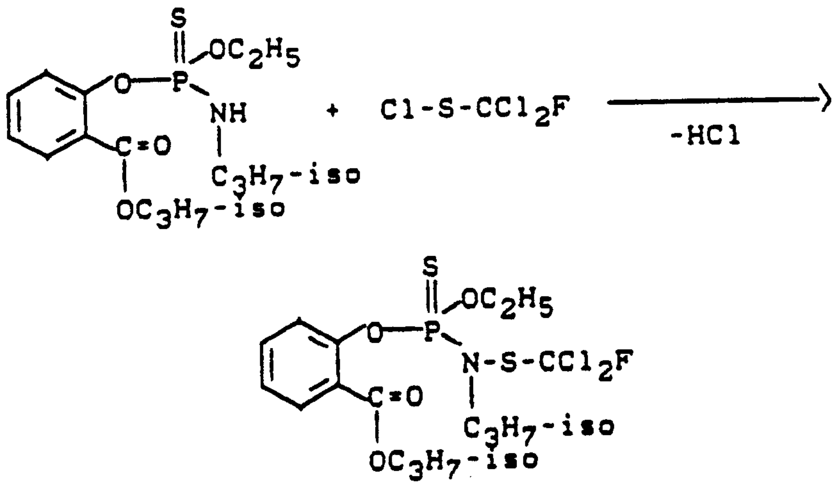


Die bei der Verfahrensvariante (a) als Ausgangsstoffe zu verwendenden Phosphorsäureesteramid-chloride sind durch die Formel (II) allgemein definiert. In dieser Formel (II) stehen $R^1$, $R^2$, X, Y, n und Z für diejenigen Reste, welche oben bei den Definitionen für Formel (I) angegeben sind.

Die Phosphorsäureesteramid-chloride der Formel (II) sind neu und Bestandteil der vorliegenden Erfindung.

Man erhält die Verbindungen der Formel (II), wenn man Phosphorsäureesteramid-chloride der Formel (VI)

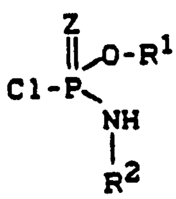
(VI)

in welcher
$R^1$, $R^2$ und Z die bei Formel (II) angegebene Bedeutung haben,
mit Sulfensäurehalogeniden der Formel (V)

$R^3$-S-$CX_nY_{3-n}$ (V)

in welcher
$R^3$, X, Y und n die bei Formel (II) angegebene Bedeutung haben,
gegebenenfalls in Gegenwart eines Verdünnungsmittels und gegebenenfalls in Gegenwart eines Säureakzeptors umsetzt.

Als Verdünnungsmittel zur Herstellung der neuen Verbindungen der Formel (II) kommen praktisch alle inerten organischen Lösungsmittel infrage.

Hierzu gehören vorzugsweise aliphatische und aromatische, gegebenenfalls halogenierte Kohlenwasserstoffe wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Dimethyl-und Dibutylether, Glykoldimethylether und Diglycoldimethylether, Tetrahydrofuran, und Dioxan, Ketone wie Aceton, Methyl-ethyl-, Methyl-isopropyl-und Methyl-isobutyl-keton, Ester wie Essigsäuremethylester und -ethylester, Nitrile wie z.B. Acetonitril und Propionitril, Amide wie z.B. Dimethylformamid, Dimethylacetamid und N-Methyl-pyrrolidon sowie Dimethylsulfoxid, Tetramethylensulfon und Hexamethylphosphorsäuretriamid.

Als Säureakzeptoren können bei dem Verfahren zur Herstellung der neuen Verbindungen der Formel (II) alle üblicherweise für derartige Umsetzungen verwendbaren Säurebindemittel eingesetzt werden. Vorzugsweise in Frage kommen Erdalkalioxide, wie z.B. Magnesiumoxid, Alkalicarbonate und -alkoholate wie Natrium-und Kaliumcarbonat, Hydride wie zum Beispiel Natriumhydrid, metallorganische Verbindungen, wie beispielsweise Butyllithium, ferner aliphatische, aromatische oder heterocyclische Amine, beispielsweise Triethylamin, Trimethylamin, Dimethylanilin, Dimethylbenzylamin, Pyridin, 1,5-Diazabicyclo-[4,3,0]-non-5-en

(DBN), 1,8-Diazabicyclo-[5,4,0]-undec-7-en (DBU) und 1,4-Diazabicyclo-[2,2,2]-octan (DABCO).

Die Reaktionstemperaturen können bei dem Verfahren zur Herstellung der Verbindungen der Formel (II) in einem größeren Bereich variiert werden. Im allgemeinen arbeitet man bei Temperaturen zwischen -20°C und +100°C, vorzugsweise bei Temperaturen zwischen -10°C und +80°C.

Zur Durchführung des Verfahrens zur Herstellung der Verbindungen der Formel (II) werden die jeweils benötigten Ausgangsstoffe im allgemeinen in äquimolaren Mengen eingesetzt.

Die Reaktionspartner werden im allgemeinen in einem der angegebenen Lösungsmittel vereinigt und zur Vervollständigung der Umsetzung eine oder mehrere Stunden gerührt. Danach fügt man ein organisches Lösungsmittel, z.B. Toluol zum Reaktionsgemisch und arbeitet die organische Phase nach üblichen Methoden durch Waschen, Trocknen und Abdestillieren des Lösungsmittels auf.

Die neuen Verbindungen der Formel (II) fallen in Form von Ölen an, die sich meist nicht unzersetzt destillieren lassen, jedoch durch sogenanntes "Andestillieren", d.h. durch längeres Erhitzen unter vermindertem Druck auf mäßig erhöhte Temperaturen von den letzten flüchtigen Anteilen befreit und auf diese Weise gereinigt werden können. Zu ihrer Charakterisierung dient der Brechungsindex.

Die bei der Verfahrensvariante (a) als Ausgangsstoffe zu verwendenden Phenole der Formel (III) sind allgemein bekannte Verbindungen der organischen Chemie. Die Phenole können auch in Form ihrer Salze (z.B. Ammoniumsalze, wie Triethylammoniumsalz, Alkali-oder Erdalkalisalze, wie Natrium-, Kalium-oder Calciumsalze) eingesetzt werden.

Die als Ausgangsstoffe zu verwendenden Phosphorsäureesteramide der Formel (IV) sind bekannt und/oder können nach allgemein bekannten Verfahren und Methoden hergestellt werden (vgl. z.B. US-PS 29 78 479 und US-PS 37 55 572).

Die bei der Verfahrensvariante (b) außerdem als Ausgangsstoffe zu verwendenden Sulfensäurehalogenide der Formel (V) sind allgemein bekannte Verbindungen der organischen Chemie. $R^3$ steht in dieser Formel für Halogen, insbesondere Chlor oder Brom, besonders bevorzugt Chlor.

Die erfindungsgemäßen Verfahrensvarianten (a) und (b) zur Herstellung der neuen Verbindungen der Formel (I) werden bevorzugt unter Verwendung von Verdünnungsmitteln durchgeführt. Als Verdünnungsmittel kommen praktisch alle organischen inerten Lösungsmittel in Frage.

Hierzu gehören vorzugsweise aliphatische und aromatische, gegebenenfalls halogenierte Kohlenwasserstoffe wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Diethyl-und Dibutylether, Glykoldimethylether und Diglycoldimethylether, Tetrahydrofuran und Dioxan, Ketone wie Aceton, Methyl-ethyl-, Methyl-isopropyl-und Methyl-isobutyl-keton, Ester wie Essigsäuremethylester und -ethylester, Nitrile wie z.B. Acetonitril und Propionitril, Amide wie z.B. Dimethylformamid, Dimethylacetamid und N-Methyl-pyrrolidon sowie Dimethylsulfoxid, Tetramethylensulfon und Hexamethylphosphorsäuretriamid.

Die erfindungsgemäßen Verfahrensvarianten (a) und (b) können gegebenenfalls in Gegenwart von Säureakzeptoren durchgeführt werden. Als Säureakzeptoren können alle üblichen Säurebindemittel Verwendung finden. Besonders bewährt haben sich Alkalicarbonate wie Natrium-und Kaliumcarbonat, Erdalkalioxide wie Magnesiumoxid, Alkalihydride wie Natriumhydrid, metallorganische Verbindungen wie z.B. Butyllithium, ferner aliphatische, aromatische oder heterocyclische Amine, beispielsweise Triethylamin, Trimethylamin, Dimethylanilin, Dimethylbenzylamin und Pyridin.

Die erfindungsgemäßen Verfahrensvarianten (a) und (b) werden im allgemeinen bei Temperaturen zwischen -20°C und +100°C durchgeführt. Bevorzugt wird der Bereich zwischen -10°C und +80°C. Die Umsetzungen werden im allgemeinen bei Normaldruck durchgeführt.

Zur Durchführung der erfindungsgemäßen Verfahrensvarianten (a) und (b) setzt man die Ausgangsstoffe vorzugsweise im äquimolaren Verhältnis ein. Ein Überschuß der einen oder anderen Komponente bringt keine wesentlichen Vorteile. Die Reaktionspartner werden im allgemeinen in einem der angegebenen Lösungsmittel vereinigt und zur Vervollständigung der Umsetzung eine oder mehrere Stunden gerührt. Danach fügt man ein organisches Lösungsmittel, z.B. Toluol zum Reaktionsgemisch und arbeitet die organische Phase nach üblichen Methoden durch Waschen, Trocknen und Abdestillieren des Lösungsmittels auf.

Die neuen Verbindungen fallen in Form von Ölen an, die sich meist nicht unzersetzt destillieren lassen, jedoch durch sogenanntes "Andestillieren", d.h. durch längeres Erhitzen unter vermindertem Druck auf mäßig erhöhte Temperatur von den letzten flüchtigen Anteilen befreit und auf diese Weise gereinigt werden können. Zu ihrer Charakterisierung dient der Brechungsindex.

Die Wirkstoffe eignen sich zur Bekämpfung von tierischen Schädlingen, vorzugsweise Arthropoden und Nematoden, insbesondere Insekten und Spinnentieren, die in der Landwirtschaft, in Forsten, im Vorrats-und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen

gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Acanthoscelides obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varive stis, Atomaria spp., Oryzaephilus surinamensis, Antho nomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Cono derus spp., Melolontha melolontha, Amphimallon solsti tialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Die erfindungsgemäßen Wirkstoffe zeichnen sich durch hervorragende insektizide Wirksamkeit aus. So ist insbesondere die langanhaltende Wirkung gegen Bodeninsekten, wie z.B. Phorbia antiqua und Diabrotica balteata sowie die hervorragende Wirkung gegen pflanzenschädigende Insekten, wie z.B. Phaedon-Larven und Plutella-Raupen zu nennen. Ganz besonders bevorzugt werden insbesondere die folgenden erfindungsgemäßen Verbindungen der Formel (I): O-Ethyl-O-(3-methyl-4-methylthio-phenyl)-N-isopropyl-N-(fluordichlormethyl-mercapto)-phosphorsäureesteramid, O-Ethyl-O-(2-isopropyloxycarbonyl-phenyl)-N-isopropyl-N-(fluordichlormethyl-mercapto)-thionophosphorsäureesteramid, O-Methyl-O-(2-isopropyloxy-carbonyl-phenyl)-N-isopropyl-N-(fluordichlormethyl-mercapto)-thionophosphorsäureesteramid, O-Ethyl-O-(3-methyl-4-methylsulfinylphenyl)-N-isopropyl-N-(fluordichlormethyl-mercapto)-phosphorsäureesteramid und O-Ethyl-O-(3-methyl-4-methylsulfonyl-phenyl)-N-isopropyl-N-(fluordichlormethyl-mercapto)-phosphorsäureesteramid.

Die erfindungsgemäßen Wirkstoffe der Formel (I) eignen sich auch zur Bekämpfung von Insekten, die

im Zusammenhang mit der Zucht oder Haltung landwirtschaftlicher Nutztiere, wie z.B. Rinder, Schafe, Ziegen, Pferde, Schweine, Esel, Kaninchen, Hühner, Puten, Enten und Gänse, sonstiger Haustiere wie z.B. Hunde, Katzen oder Stubenvögel auftreten.

Durch die Bekämpfung dieser Insekten sollen vor allem Leistungsminderungen (bei Fleisch, Milch, Volle, Häuten, Eiern usw.) vermieden werden, so daß durch den Einsatz der erfindungsgemäßen Wirkstoffe eine wirtschaftlichere und einfachere Tierhaltung möglich ist.

Die Anwendung der erfindungsgemäßen Wirkstoffe geschieht hierbei in bekannter Weise, beispielsweise in Form des Tauchens oder Badens (Dippen), Sprühens (Spray), Aufgießens (Pour-on und Spot-on), des Waschens, des Einpuderns sowie mit Hilfe von wirkstoffhaltigen Fremdkörpern, wie Halsbändern, Ohrmarken, Schwanzmarken, Gliedmaßenbändern, Halftern, Markierungsvorrichtungen usw..

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur-und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt-und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenak tiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder -schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Halfmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo-und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a..

Die Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu

95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene-und Vorratsschädlinge zeichnen sich die Wirkstoffe durch eine hervorragende Residualwirkung auf Holz und Ton sowie durch eine gute Alkalistabilität auf gekälkten Unterlagen aus.

Die Herstellung und die Verwendung der erfindungsgemäßen Wirkstoffe wird durch die folgenden Beispiele erläutert.

Herstellungsbeispiele:

Beispiel 1

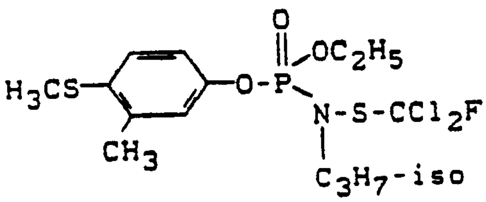

[Verfahrensvariante (a)]

Zu einer Mischung aus 4,93 g (0,032 Mol) 3-Methyl-4-methylthiophenol, 6,6 g (0,048 Mol) Kaliumcarbonat und 80 ml Acetonitril gibt man bei Raumtemperatur (20°C) 10,4 g (0,032 Mol) Phosphorsäure-ethylester-N-isopropyl-N-(fluordichlormethylmercapto)-amid-chlorid. Man rührt das Reaktionsgemisch 18 Stunden bei Raumtemperatur nach, gibt 400 ml Toluol zu und schüttelt dann dreimal mit je 200 ml Wasser aus. Die organische Phase wird über Natriumsulfat getrocknet und im Vakuum eingedampft. Den Rückstand destilliert man bei 50°C im Hochvakuum an. Man erhält so 11,2 g (86 % der Theorie) O-Ethyl-O-(3-methyl-4-methylthiophenyl)-N-isopropyl-N-(fluordichlormethyl-mercapto)-phosphorsäureesteramid in Form eines beigen Öles mit dem Brechungsindex $n_D^{26}$ = 1.5390.

Beispiel 2

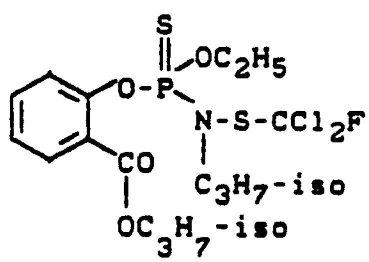

[Verfahrensvariante (b)]

Eine Mischung aus 17,2 g (0,05 Mol) Thiophosphorsäure-O-ethyl-O-(2-isopropyloxycarbonylphenyl)-diester-N-isopropylamid (Isofenphos), 100 ml Toluol und 7 g (0,07 Mol) Triethylamin wird bei 0 - 5°C mit 9,4 g (0,055 Mol) Fluordichlormethansulfenylchlorid versetzt und dann 6 Stunden bei Raumtemperatur

nachgerührt. Man saugt vom ausgefallenen Amin-Hydrochlorid ab, wäscht mit Toluol nach und schüttelt das Filtrat 2 mal mit je 50 ml Wasser aus. Die organische Phase wird über Natriumsulfat getrocknet und im Vakuum eingedampft. Den Rückstand destilliert man bei 40-50°C im Hochvakuum an. Man erhält auf diese Weise 22 g (92 % der Theorie) O-Ethyl-O-(2-isopropyloxycarbonylphenyl)-N-isopropyl-N-(fluordichlormethyl-mercapto)-thionophosphorsäureesteramid in Form eines hellbraunen Öls mit dem Brechungsindex $n_D^{26}$ = 1,5295.

In analoger Weise zu den in den Beispielen 1 oder 2 beschriebenen Methoden und unter Berücksichtigung der Angaben in den Beschreibungen zu den erfindungsgemäßen Verfahren, werden die nachfolgend aufgeführten Endprodukte der Formel (I):

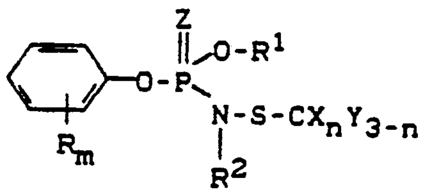

(I)

erhalten:

Bsp. 3 : $R_m$ = 2-i-Propyloxycarbonyl; $R^1$ = Methyl; $R^2$ = i-Propyl; $CX_nY_{3-n}$ = $CCl_2F$ und Z = Schwefel

O-Methyl-O-(2-isopropyloxycarbonyl-Phenyl)-N-isopropyl-N-(fluordichlormethyl-mercapto)-thionophosphorsäureesteramid $n_D^{20}$ = 1,5330,

Bsp. 4 : $R_m$ = 3-Methyl, 4-Methylsulfinyl; $R^1$ = Ethyl; $R^2$ = i-Propyl; $CX_nY_{3-n}$ = $CCl_2F$ und Z = Sauerstoff

O-Ethyl-O-(3-methyl-4-methylsulfinyl-phenyl)-N-isopropyl-N-(fluordichlormethyl-mercapto)-phosphorsäureesteramid,

Bsp. 5: $R_m$ = 3-Methyl, 4-Methylsulfonyl; $R^1$ = Ethyl; $R^2$ = i-Propyl; $CX_nY_{3-n}$ = $CCl_2F$ und Z = Sauerstoff

O-Ethyl-O-(3-methyl-4-methylsulfonyl-phenyl)-N-isopropyl-N-(fluordichlormethyl-mercapto)-phosphorsäureesteramid.

Herstellung der Ausgangsstoffe der Formel (II)

Beispiel (II-1)

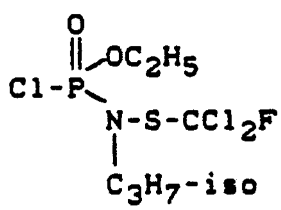

Eine Lösung von 18,6 g (0,1 Mol) Phosphorsäure-ethylesterisopropylamid-chlorid in 150 ml Toluol

versetzt man bei 0 - 5°C erst mit 17 g (0,1 Mol)Fluordichlormethansulfenylchlorid und dann mit 11,6 g (0,115 Mol) Triethylamin. Man rührt das Reaktionsgemisch 3 Stunden bei Raumtemperatur (20°C) nach, saugt dann vom ausgefallenen Amin-Hydrochlorid ab und wäscht mit Toluol nach. Das Filtrat wird 2 mal mit je 50 ml Wasser ausgeschüttelt; dann trocknet man die organische Phase über Natriumsulfat und destilliert das Lösungsmittel im Vakuum ab. Den Rückstand destilliert man im Hochvakuum. Man erhält so 12 g (38 % der Theorie) Phosphorsäure-ethylester-N-isopropyl-N-(fluordichlormethylmercapto)-amid-chlorid in Form einer farblosen Flüssigkeit mit dem Siedepunkt 113°C/1 Torr.

Anwendungsbeispiele:

Beispiel A

Wirkungsdauer-Test / Bodeninsekten

Testinsekt: Diabrotica balteata
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration. Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (mg/l) angegeben wird. Man füllt den Boden in 5 l Töpfe und läßt diese bei 20°C stehen. Nach 7, 15, 30, 60, 90, 120 Tagen werden nach vorheriger erneuter Durchmischung Bodenproben von 250 ml entnommen und in den behandelten Boden die entsprechenden Testinsekten gesetzt. Nach weiteren 2 bis 7 Tagen wird der Wirkungsgrad des Wirkstoffes durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie in der unbehandelten Kontrolle.

In diesem Test zeigten die Verbindung aus Beispiel 1 bei einer beispielhaften Konzentration von 2,5 ppm z.B. nach 1 Woche eine 100 % Wirkung und die Verbindung aus Beispiel 2 bei einer beispielhaften Konzentration von 1 ppm z.B. nach 1 Woche eine 100 % Wirkung.

Beispiel B

Wirkungsdauer-Test / Bodeninsekten

Testinsekt: Phorbia antiqua-Maden
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration. Die Wirkstoffzubereitung wird innig mit dem Boden vermischt. Dabei spielt die Konzentration des Wirkstoffes in der Zubereitung praktisch keine Rolle, entscheidend ist allein die Wirkstoffgewichtsmenge pro Volumeneinheit Boden, welche in ppm (mg/l) angegeben wird. Man füllt den Boden in 5 l Töpfe und läßt diese bei 20°C stehen.

Im Abstand von 2 Wochen werden nach vorheriger erneuter Durchmischung Bodenproben von 250 ml entnommen und in den behandelten Boden die entsprechenden Testinsekten gesetzt. Nach weiteren 2 bis 7 Tagen wird der Wirkungsgrad des Wirkstoffes durch Auszählen der toten und lebenden Testinsekten in %

bestimmt. Der Wirkungsgrad ist 100 %, wenn alle Testinsekten abgetötet worden sind, er ist 0 %, wenn noch genau so viele Testinsekten leben wie in der unbehandelten Kontrolle. In diesem Test zeigten die Verbindungen der Beispiele 1, 2 und 3 bei einer beispielhaften Konzentration von 10 ppm z.B. nach 4 Wochen eine 100 % Wirkung.

Beispiel C

Plutella-Test

Lösungsmittel: 7 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Raupen der Kohlschabe (Plutella maculipennis) besetzt, solange die Blätter noch feucht sind.

Nach der gewünschten Zeit wird die Abtötung in % bestimmt. Dabei bedeutet 100 %, daß alle Raupen abgetötet wurden; 0 % bedeutet, daß keine Raupen abgetötet wurden.

Bei diesem Test zeigten die Verbindungen der Beispiele 1, 2 und 3 bei einer beispielhaften Konzentration von 0,1 % nach 3 Tagen einen Abtötungsgrad von 100 %.

Beispiel D

Phaedon-Larven-Test

Lösungsmittel: 7 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea) werden durch Tauchen in die Wirkstoffzubereitung der gewünschten Konzentration behandelt und mit Meerrettichblattkäfer-Larven (Phaedon cochleariae) besetzt, solange die Blätter noch feucht sind.

Nach der gewünschten Zeit wird die Abtötung in % bestimmt. Dabei bedeutet 100 %, daß alle Käferlarven abgetötet wurden; 0 % bedeutet, daß keine Käfer-Larven abgetötet wurden.

Bei diesem Test zeigten die Verbindungen der Beispiele 1, 2 und 3 bei einer beispielhaften Konzentration von 0,01 % nach 3 Tagen einen Abtötungsgrad von 100 %.

Beispiel E

Test mit Lucilia cuprina resistent-Larven (OP-resistenter Goondiwindi-Stamm)

Emulgator: 35 Gewichtsteile Ethylenglykolmonomethylether
35 Gewichtsteile Nonylphenolpolyglykolether

Zur Herstellung einer zweckmäßigen Wirkstoffzubereitung vermischt man drei Gewichtsteile Wirkstoff mit sieben Gewichtsteilen des oben angegebenen Gemisches und verdünnt das so erhaltene Konzentrat mit Wasser auf die jeweils gewünschte Konzentration.

Etwa 20 Lucilia cuprina res.-Larven werden in ein Teströhrchen gebracht, welches ca. 1 $cm^3$ Pferdefleisch und 0,5 ml der Wirkstoffzubereitung enthält. Nach 24 Stunden wird der Abtötungsgrad bestimmt.

Bei diesem Test zeigte z.B. die Verbindung aus Beispiel 3 bei einer beispielhaften Konzentration von 30 ppm eine Abtötung von 100 %.

**Ansprüche**

1. Phosphorsäureesteramide der allgemeinen Formel (I)

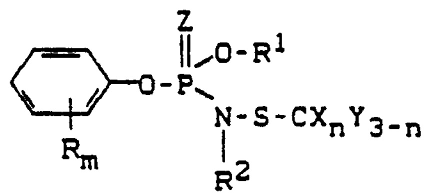

(I)

in welcher
R gleich oder verschieden ist und für Alkyl, Alkoxy, Alkylthio, Alkylsulfinyl, Alkylsulfonyl, Alkoxycarbonyl, Halogen, Nitro, Halogenalkyl und Cyano steht,
m für eine Zahl 1, 2 oder 3 steht,
$R^1$ und $R^2$ gleich oder verschieden sind und für Alkyl stehen,
Z für Sauerstoff oder Schwefel steht,
X und Y gleich oder verschieden sind und für Halogen stehen und
n für die Zahl 0, 1, 2 oder 3 steht.

2. Phosphorsäureesteramide gemäß Anspruch 1, in welchen
R gleich oder verschieden ist und für $C_1$-$C_4$-Alkyl, $C_1$-$C_4$-Alkoxy, $C_1$-$C_4$-Alkylthio, $C_1$-$C_4$-Alkyl sulfinyl, $C_1$-$C_4$-Alkylsulfonyl, $C_1$-$C_4$-Alkoxycarbonyl; Halogen; Nitro; Halogen-$C_1$-$C_4$-alkyl mit 1 bis 7 Halogenatomen oder Cyano steht,
m für eine Zahl 1, 2 oder 3 steht,
$R^1$ und $R^2$ gleich oder verschieden sind und für $C_1$-$C_4$-Alkyl stehen,
Z für Sauerstoff oder Schwefel steht,
X und Y gleich oder verschieden sind und für Chlor oder Fluor stehen und
n für die Zahl 0, 1, 2 oder 3 steht.

3. Phosphorsäureesteramide gemäß Anspruch 1, in welchen
R gleich oder verschieden ist und für Methyl, Ethyl, Methoxy, Methylthio, Methylsulfinyl, Methylsulfonyl, Methoxycarbonyl, Ethoxycarbonyl, Isopropoxycarbonyl, Fluor, Chlor, Brom, Nitro, Trifluormethyl oder Cyano steht,
m für eine Zahl 1, 2 oder 3 steht,
$R^1$ und $R^2$ gleich oder verschieden sind und für Methyl, Ethyl, n-oder i-Propyl, n-, i-, s-und t-Butyl stehen,
Z für Sauerstoff oder Schwefel steht,
X und Y gleich oder verschieden sind und für Fluor oder Chlor stehen und
n für die Zahl 0, 1, 2 oder 3 steht.

4. Phosphorsäureesteramide der Formeln

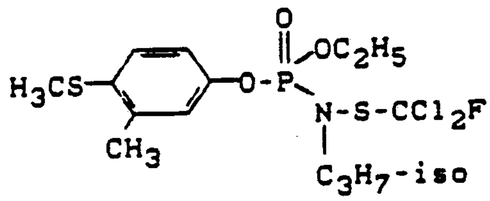

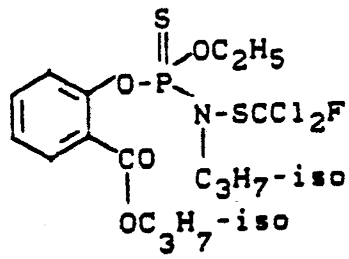

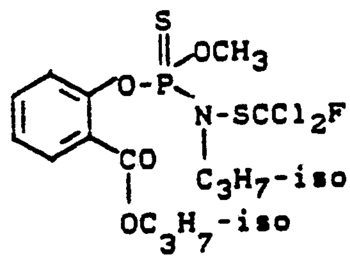

5. Verfahren zur Herstellung der Phosphorsäureesteramide der allgemeinen Formel (I)

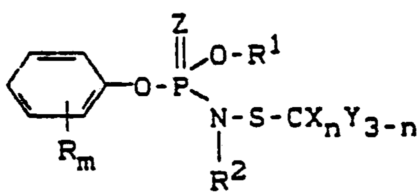

(I)

in welcher
R gleich oder verschieden ist und für Alkyl, Alkoxy, Alkylthio, Alkylsulfinyl, Alkylsulfonyl, Alkoxycarbonyl, Halogen, Nitro, Halogenalkyl und Cyano steht,
m für eine Zahl 1, 2 oder 3 steht,
$R^1$ und $R^2$ gleich oder verschieden sind und für Alkyl stehen,
Z für Sauerstoff oder Schwefel steht,
X und Y gleich oder verschieden sind und für Halogen stehen und
n für die Zahl 0, 1, 2 oder 3 steht,
dadurch gekennzeichnet, daß man

a) Phosphorsäureesteramid-chloride der allgemeinen Formel (II)

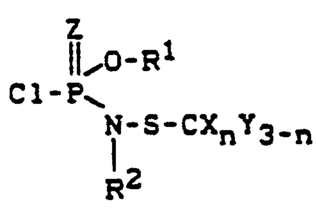

(II)

in welcher

$R^1$, $R^2$, Z, X, Y und n die oben angegebene Bedeutung haben, mit Phenolen der allgemeinen Formel (III)

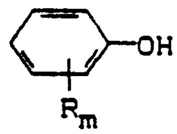

(III)

in welcher
R und m die oben angegebene Bedeutung haben, gegebenenfalls in Form ihrer Salze, gegebenenfalls in Gegenwart eines Säureakzeptors und gegebenenfalls in Gegenwart eines Verdünnungsmittels umsetzt, oder

b) Phosphorsäureesteramide der allgemeinen Formel (IV)

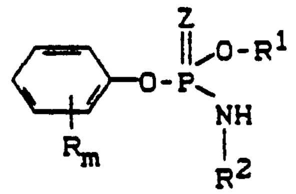

(IV)

in welcher
R, $R^1$, $R^2$, Z und m die oben angegebene Bedeutung haben, mit Sulfensäurehalogeniden der allgemeinen Formel (V)

$R^3$-S-$CX_nY_{3-n}$ (V)

in welcher
X, Y und n die oben angegebene Bedeutung haben und
$R^3$ für Halogen steht,
gegebenenfalls in Gegenwart eines Säureakzeptors und gegebenenfalls in Gegenwart eines Verdünnungsmittels umsetzt.

6. Schädlingsbekämpfungsmittel, gekennzeichnet durch einen Gehalt an mindestens einer Verbindung gemäß den Ansprüchen 1 bis 4 bzw. der Formel (I) gemäß Anspruch 5.

7. Verwendung von Verbindungen gemäß den Ansprüchen 1 bis 4 bzw. der Formel (I) gemäß Anspruch 5 zur Bekämpfung von Schädlingen, insbesondere von Insekten.

8. Verfahren zur Bekämpfung von Schädlingen, dadurch gekennzeichnet, daß man Verbindungen gemäß den Ansprüchen 1 bis 4 bzw. der Formel (I) gemäß Anspruch 5 auf die Schädlinge, vorzugsweise Insekten oder ihren Lebensraum einwirken läßt.

9. Verfahren zur Herstellung von Schädlingsbekämpfungsmitteln, dadurch gekennzeichnet, daß man Verbindungen gemäß den Ansprüchen 1 bis 4 bzw. der Formel (I) gemäß Anspruch 5 mit Streckmitteln und/oder oberflächenaktiven Mitteln vermischt.

10. Phosphorsäureesteramid-chloride der allgemeinen Formel (II)

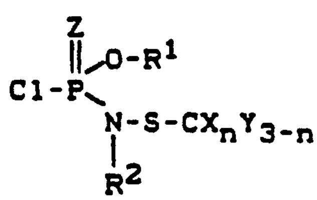

(II)

in welcher
$R^1$ und $R^2$ gleich oder verschieden sind und für Alkyl stehen,
Z für Sauerstoff oder Schwefel steht,
X und Y gleich oder verschieden sind und für Halogen stehen und
n für die Zahl 0, 1, 2 oder 3 steht.

Europäisches Patentamt

# EUROPÄISCHER RECHERCHENBERICHT

Nummer der Anmeldung

EP 88 10 5493

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 151 100 (BAYER AG)<br>* Ansprüche *<br>--- | 1,6-9 | C 07 F 9/24<br>C 07 F 9/26<br>A 01 N 57/30 |
| Y | EP-A-0 060 474 (BAYER AG)<br>* Seiten 26-31 *<br>----- | 1,6-9 | |

| RECHERCHIERTE SACHGEBIETE (Int. Cl.4) |
|---|
| C 07 F 9/00 |

Der vorliegende Recherchenbericht wurde für alle Patentansprüche erstellt

| Recherchenort | Abschlußdatum der Recherche | Prüfer |
|---|---|---|
| DEN HAAG | 01-07-1988 | BESLIER L.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)